# EUROPEAN PATENT SPECIFICATION

(11) **EP 4 272 548 B1**
(45) Date of publication and mention of the grant of the patent: **01.07.2026**
(21) Application number: 22171358.9
(22) Date of filing: 03.05.2022
(51) Int. Cl.: A01K 1/02

(54) **ANIMAL TRANSPORT CAGE**
TIERTRANSPORTKÄFIG
CAGE DE TRANSPORT D'ANIMAUX

(43) Date of publication of application: 08.11.2023
(73) Proprietor: Thule Sweden AB, 335 04 Hillerstorp (SE)
(72) Inventor: Nordangård, Markus, 33155 Värnamo (SE); Lyreborg, Micael, 52170 Åsarp (SE); Arvidsson-Björkman, Anton, 56196 Lekeryd (SE); Gustafsson, Adam, 55445 Jönköping (SE); Eriksson, Henrik, Jönköping 55448 (SE)
(74) Representative: Wallentin, Lars

(56) References cited:
- CN-A- 108 849 563
- DE-U1- 20 007 133
- US-A- 5 054 426
- US-A- 5 233 939
- US-A1- 2014 252 791
- US-B1- 7 228 820

## Description

### TECHNICAL FIELD

The present disclosure relates animal cages or crates for keeping animals during transport. More particularly, the present invention relates to an animal cage suitable for use for transportation of an animal in a vehicle.

### BACKGROUND OF THE INVENTION

Animal cages or crates are typically used for keeping animals during short periods of time and/or during transportation for instance in vehicles. It is often desired and, in some countries, also a requirement that animals are kept in cages during transportation inside of a vehicle, not only for the safety of the animal but also for the safety of the other occupants of vehicle. Naturally, an animal cage should be designed with the animal in mind to allow it to be as calm and comfortable as possible when kept in the cage.

Additionally, animal cages intended for use in vehicles are subject to a number of safety requirements. Generally, an animal cage must withstand the forces of an accident such that the animal kept therein is to at least some extent protected and such that it cannot be ejected from the cage by the forces which may arise in an accident. Additionally, the components of the animal cage itself must not become detached as free flying items in a vehicle under significant acceleration/deceleration can form dangerous projectiles.

Naturally, an animal cage should make efficient use of space in that it should provide a large interior for the animal while the exterior of the cage should take up as little space as possible for instance in a vehicle. Additionally, an animal cage should be easy to use and allow easy entry and exit for the animal even in the case that the owner of the animal have to carry the animal into the cage. Prior art animal cages has been found to leave room for improvement in at least some of the foregoing areas.

US7228820 relates to an adjustable kennel that is lightweight and collapsible for storage and travel. The kennel has an expandable frame and a cover dimensioned to fit the frame.

DE20007133 relates to a cage for animal transportation having a frame construction that is deformable in the longitudinal direction.

### SUMMARY OF THE INVENTION

In view of the above, an object of the present invention is to provide an improved animal cage having improved safety over prior art animal cages. Further advantages of the present invention are to provide an animal cage facilitating placement and removal of the animal from the animal cage, and to facilitate removal/evacuation of an animal from the cage for instance in the case of an accident.

The object is achieved by the subject-matter of independent claim 1. Advantageous embodiments may be found in the dependent claims and in the accompanying description and drawings.

According to the invention, an animal cage suitable for use for transportation of an animal in a vehicle is provided. The animal cage comprising:
- a bottom,
- a top,
- a frame assembly connecting the bottom to the top. The frame assembly comprising a front portion and a rear portion, the front portion and rear portion being reciprocally moveable relative one another along a longitudinal direction of the animal cage such that a length of the animal cage may be adapted and wherein the animal cage comprises at least one resistance altering element having at least one pre-set force state for altering a longitudinal force required for relative movement of the front and rear portion. By providing the resistance altering element can the cage be adjusted in size as desired depending on the size of the animal to be transported and/or the size of the vehicle. Additionally, the required force for relative movement of the front and rear portion can be controlled to allow relative movement of the front and rear portion in the case of for instance an accident causing a rapid acceleration/deceleration, allowing the animal cage to better withstand the forces associated with such an event. The animal cage is thus made both safer and more user friendly.

The resistance altering element can be set to at least a high force state in which the longitudinal force required for relative movement of the front and rear portion is high and a low force state in which the longitudinal force required for relative movement of the front and rear portion is low relative the high force state. The predetermined high and low force state of the resistance altering element facilitates providing the desired safety of the animal cage, while allowing the user to adjust the size of the animal cage when desired. The resistance altering element may comprise a clamp mechanism configured to alter a pressure applied to an interface for controlling an induced friction force thus altering the longitudinal force required for relative movement of the front and rear portion.

The frame assembly may comprise at least one telescopic element extending between the front portion and the rear portion and wherein at least one of the at least one telescopic element is provided with the resistance altering element. The telescopic element being provided with the resistance altering element facilitates adjusting the resistance altering element and thus the size of the animal cage.

The frame assembly may comprise a plurality of telescopic elements provided on each lateral side of the animal cage, the telescopic elements may be formed as side enclosure bars of the animal cage.

At least one telescopic element on each lateral side of the animal cage may be provided with a resistance altering element, thus allowing the animal cage to absorb a longitudinal force evenly on both lateral sides and facilitating the reciprocal relative movement of the front and rear portion in the longitudinal direction.

The clamp mechanism may be configured to be set in a clamping state in which the pressure applied to the interface is high and in a released state in which the pressure applied to the interface is low.

The resistance altering element may comprise a cam surface configured to alter the force required for telescopic movement of the front and rear portion.

The clamp mechanism may control the position of the cam surface.

The longitudinal force required for achieving relative movement of the front and rear portion in the high force state may correspond to at least half of a total weight of the animal cage, thus ensuring that relative movement of the first and rear portion occurs in the case of an accident which absorbs the forces acting on the animal cage in the longitudinal direction thereof. The risk of damage to the animal cage is thus reduced in the case of an accident as well as the safety for the animal kept in the cage.

The longitudinal force required for achieving relative movement of the front and rear portion in the high force state is between 50 N and 200 N.

The telescopic element provided with the resistance altering element may be arranged at a height from the bottom of the animal cage in the proximity of a height from the bottom of the animal cage of a center of gravity of said animal cage. The longitudinal force causing relative movement of front and rear portion of the animal cage, for instance in the case of an accident, it thus more likely to be focused in the telescopic element having the resistance altering element. As such, the relative movement of the front and rear portion is made more reliable and accordingly is the safety of the animal cage improved.

The telescopic element may be provided with the resistance altering element arranged at a height from the bottom of the animal cage that is essentially half of a total height of the animal cage. The longitudinal force causing relative movement of front and rear portion of the animal cage, for instance in the case of an accident, it thus more likely to be focused in the telescopic element having the resistance altering element. As such, the relative movement of the front and rear portion is made more reliable and accordingly is the safety of the animal cage improved.

The animal cage may further comprises a stop element being configured to form a limit for the relative movement of the front and rear portion such that the front portion and rear portion cannot move past a first relative position and wherein the stop element is configured to allow movement of the front portion and rear portion past the first relative position when the animal cage is subjected to a longitudinal force being higher than a threshold value. The force is preferably more than the force required for achieving relative movement of the front and rear portion in the low force state of the resistance altering element. The user can thus adjust the animal cage to any size setting without risking that the relative movement of the first and rear portion is effected, thus providing the desired safety to the animal cage while providing the user with the freedom to adjust the animal cage as desired. The first relative position may thus be a smallest size of the animal cage, i.e. when the front portion and the rear portion is as close together as allowed by the stop element.

The threshold value of the longitudinal force may be at least half of the weight of the animal cage.

In a second aspect of the cage according to the invention, the cage includes:
- a cage access opening at least in the front portion, the cage access opening being provided with an access door being pivotable in relation to the front portion,
- an access door motion control mechanism being configured to provide a moment of force that varies with the opening angle of the access door. As such, the movement of the access door can be adapted to facilitate opening and maintaining of an open position at larger opening angles of the door. Moreover, the motion control mechanism can allow the access door to automatically close at smaller opening angles.

The motion control mechanism may be configured to increase the moment of force in the opening direction of the access door with increasing opening angle of the access door, facilitating access to the cage access opening and reducing the need for the user to have to manually move the door at larger opening angles.

The motion control mechanism may comprise a constant force spring.

The moment of force of the motion control mechanism in the opening direction in or near a closed position of the access door may be less than a moment of force required to move the access door in the opening direction, thus allowing the access door to self-close.

A hinge of the access door may be arranged at an angle in relation to a vertical direction such that the access door in opening angles less than 90° is biased into the closed position, further facilitating self-closing of the access door.

The motion control mechanism may be arranged between the frame assembly and the access door such that a moment of force in the opening direction is less near the closed position of the door and increases in an opening direction of the access door.

A closing moment of force acting in the closing direction from the weight of the access door may overcome the opening moment of force at least at opening angles less than 20° thus allowing automatic access door closing.

The constant force spring may be arranged at a hinged side of the access door and wherein an angle between an axial direction of the constant force spring in which the force from the constant spring acts and a hinge of the access door increases with increased opening angle of the access door, thus providing a larger moment of force with an increased opening angle for a given axial force from the motion control mechanism.

At least one end of the constant force spring may be attached to the animal cage by means of a ball joint.

A lever arm distance between a hinge of the access door and an axial direction of the motion control mechanism may increase with increased opening angle at least between 0° and 90° opening angle thereof, thus increasing the opening moment of force for a given axial force provided by the motion control mechanism.

The lever arm distance D4 may be such that the motion control mechanism provides a closing moment of force in a closed position of the access door, thus facilitating closing of the access door.

In a third aspect of the cage according to the invention, the cage includes:
- at least one animal evacuation hatch configured to allow extraction of the animal in case of emergency. The animal evacuation hatch comprising a latching arrangement being configured to secure the evacuation hatch in relation to the frame assembly such that the evacuation hatch can be locked in place automatically by the latching arrangement when brought into a predetermined position in relation to the frame assembly. An evacuation hatch is thus provided which facilitates extraction of the animal kept in the cage, for instance in case of an incident which makes the main access door unusable. The evacuation hatch being automatically locked in place facilitates arranging the evacuation hatch correctly in relation to the cage.

The evacuation hatch may be arranged in the rear portion of the animal cage.

The latching arrangement may comprise a first and a second latching arrangement arranged at opposite lateral sides of the evacuation hatch, thus reducing the risk of that the evacuation hatch is unintentionally opened and facilitating opening of the evacuation hatch when needed.

Each latching arrangement may comprise a latching pin moveable between an extended and retracted position.

Each latching pin may comprise a handle for moving both the latching pin and the evacuation hatch, whereby the evacuation hatch can be handled, opened and lifted away from the animal cage by the handles arranged on the latching pin.

Each latching pin may be biased into the extended position, thus facilitating locking the evacuation in place in the predetermined position in relation to the animal cage.

The rear portion may comprise laterally opposite abutment surfaces being inclined such that a horizontal distance between the opposite abutment surfaces decreases in the longitudinal direction towards the front portion and wherein the evacuation hatch comprises a first and second lateral flange on opposite lateral sides of the evacuation hatch being configured to abut against the abutment surfaces to limit a forward movement of the evacuation hatch towards the front portion.

Each latching pin may be configured to slide against a respective one of opposite abutment surfaces of the rear portion, the opposite abutment surfaces being inclined such that a horizontal distance between the opposite abutment surfaces decreases in the longitudinal direction towards the front portion, whereby each latching pin is moved out of its extended position until it passes the rear portion whereby the latching pin extends and locks the evacuation hatch in place. The arrangement of the evacuation hatch and locking thereof in the predetermined position is thus facilitated, as each latching pin retracts and extends as it passes the rear portion as the evacuation hatch is moved into the predetermined position by the user.

The evacuation hatch may comprise a lower flange extending along a lower edge thereof, the lower flange being configured to form a stop for preventing the lower edge of the evacuation hatch to move away from the front portion.

The lower flange may form a stepped surface being offset from the remaining evacuation hatch, the lower flange forming a pivot point around which the evacuation hatch can pivot, thus facilitating arranged the evacuation hatch in the predetermined position as well as opening and removal of the evacuation hatch.

In a fourth aspect of the cage according to the invention, the animal cage further comprises a stop element being configured to form a limit for the telescopic movement of the front and rear portion such that the front portion and rear portion cannot move past a first relative position and wherein the stop element is configured to allow relative movement of the front portion and rear portion past the first relative position when the animal cage is subjected to a force in the longitudinal direction being higher than a threshold value. The relative movement past the first relative position when the animal force is subjected to a force higher than a threshold value enables provision of an animal cage that can be adjusted in size by a user while reducing the risk that such adjustment adversely affects the safety of the animal cage.

The stop element may comprise at least one pin being configured to be sheared of by telescopic relative movement between the front portion and rear portion in case the animal cage is subjected to a force in the longitudinal direction being higher than the threshold value.

The bottom may comprise a front bottom portion and a rear bottom portion and the top may comprise a front top portion and a rear top portion, the top and bottom being telescopically moveable in the longitudinal direction of the animal cage, wherein a stop element is provided in the bottom and/or top such that relative movement of the front portion of the frame arrangement and the rear portion of the frame arrangement past the first relative position is only possible when the animal cage is subjected to a force in the longitudinal direction being higher than the threshold value.

The frame assembly may comprise at least one telescopic element extending between the front portion and the rear portion, wherein a stop element is provided in a front telescopic portion and/or rear telescopic portion in at least one of the at least one telescopic element such that movement of the front portion and the rear portion past the first relative position is only possible when the animal cage is subjected to a force in the longitudinal direction being higher than the threshold value.

The pin may be configured to cooperate with a slot such that the extension of the slot defines the first position and wherein the pin is configured to be sheared of by engagement of an end of the slot.

The pin may be configured to be sheared before plastic deformation is achieved in the slot, thus reducing the risk of damage to the animal cage when the pin is sheared of.

The pin may be releasably attached to the animal cage such that it can be replaced, allowing the functionality of the pin to be restored even in the case that the animal cage has been subjected to a force being higher than the threshold value.

In a fifth aspect of the cage according to the invention, the cage further includes:
- an access opening being provided in the front portion and/or the rear portion, and
- an access door arranged in the access opening, the access door having an upper portion and a lower portion being individually moveable between an open position and a closed position in relation to the access opening, wherein the upper portion is configured to pivot around an upper pivot axis and the lower portion is configured to pivot around a lower pivot axis. Access to the animal cage through the access opening may thus be facilitated, the upper portion of the access door opening in an outwardly and upwardly direction while the lower portion of the access door opens in an outwardly and downwardly direction. Moreover, the upper portion and lower portion being individually moveable facilitates opening of the access door while reducing the risk of the animal kept therein escapes. The upper and lower portion may be connected and interlocked in the closed position. When opening the top portion, the bottom may still be closed, limiting the dogs exit, keeping it in control and contained. When the lower portion is opened it may create a platform that could be used when preparing the dog for an activity, e.g. putting on a reflective vest. Moreover, the access door having an upper and a lower portion facilitates use of the animal cage for instance when a trunk of the vehicle has a threshold at the trunk entry which would then still allow the upper portion of the animal cage to be opened.

The lower portion in the open position thereof may be configured to be arranged essentially parallel with the bottom of the animal cage, thus essentially forming a platform which extends the bottom of the animal cage facilitating extraction of the animal kept therein. For instance, the animal may be brought out of the animal cage and at least partially be arranged on the lower portion for instance for allowing the user to attach a leash on the animal.

The height of the lower portion may be essentially one third of a total height of the access opening.

The upper portion and/or the lower portion may be connected to the animal cage by means of a control member, the control member controlling the movement of the associated upper portion and/or lower portion between the open and closed position thereof.

The upper pivot axis and the lower pivot axis may be essentially perpendicular to a longitudinal direction of the animal cage.

### BRIEF DESCRIPTION OF THE DRAWINGS

With reference to the appended drawings, below follows a more detailed description of embodiments of the invention cited as examples.

In the drawings:
Figure 1 discloses a front perspective view of an animal cage.
Figure 2 discloses a side view of a an animal cage in a compressed state.
Figure 3 discloses a detail cross-sectioned view of the longitudinal bottom track and bottom track member.
Figure 4 discloses a detail cross-sectioned view of the longitudinal top track and top track member.
Figure 5 discloses a side view of an animal cage in an expanded state.
Figure 6 discloses a detail view of a resistance altering element in a high force state.
Figure 7 discloses a detail view of a resistance altering element between a high force state and a low force state.
Figure 8 discloses a detail view of a resistance altering element in a low force state.
Figure 9 discloses a detail perspective view of a resistance altering element of an animal cage.
Figure 10 discloses a detail front view of a resistance altering element of an animal cage.
Figure 11 discloses a detail side view of a resistance altering element of an animal cage.
Figure 12 discloses a bottom view of an animal cage.
Figure 13 discloses a detail view of a stop element of an animal cage.
Figure 14 discloses a perspective view of an animal cage with an access door in an open position.
Figure 15 discloses a bottom cross-sectioned view of an animal cage with an access door in an open position.
Figure 16 discloses a side view of an animal cage with an access door in an open position.
Figure 17 discloses a cross-sectioned side view of an animal cage with an access door in a closed position.
Figure 18 discloses a bottom cross-sectioned view of an animal cage with an access door in a closed position.
Figure 19 discloses a rear view of an evacuation hatch of an animal cage.
Figure 20 discloses a front view of an evacuation hatch of an animal cage.
Figure 21 discloses a cross-sectioned perspective view of an opened evacuation hatch of an animal cage.
Figure 22 discloses a perspective view of an animal cage having an access door comprising an upper portion and a lower portion.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION

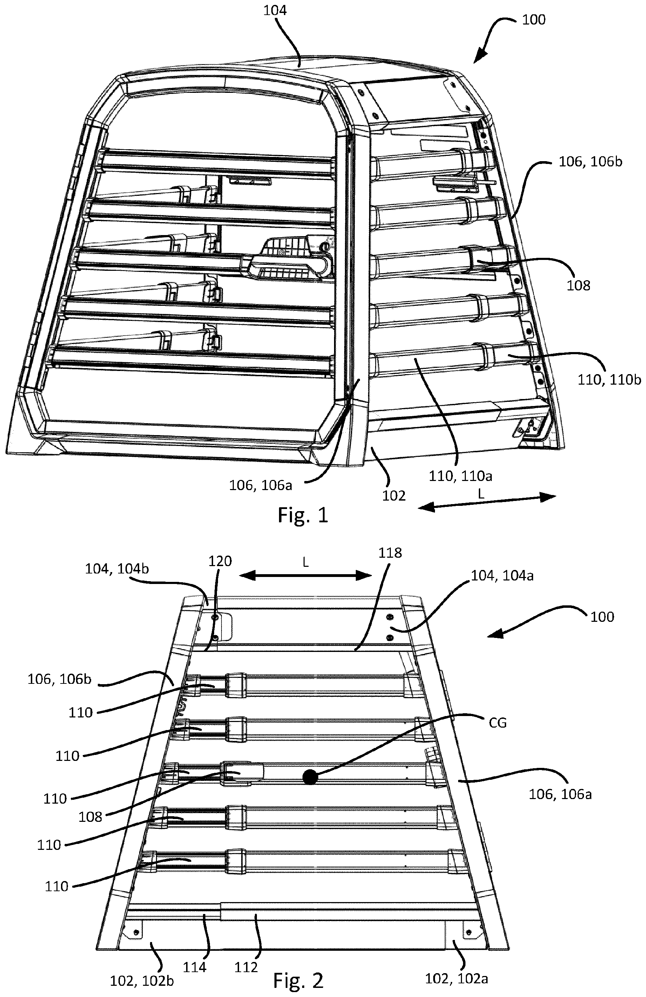

Figure 1 shows a front perspective view of an animal cage 100. The animal cage 100 is suitable for transporting and keeping animals, preferably dogs but it is naturally suited for other animals as well. The animal cage 100 is ideally used for keeping the animal in a confined space during transportation in or on a vehicle, such as in the trunk of a car. As such, the animal cage 100 provides a confinement for the animal within the vehicle and prevents it from moving around which is not desired as it could cause a distraction and danger during driving.

The animal cage comprises a bottom 102 and a top 104. The bottom 102 forms the structure in the animal cage 100 on which the animal rests as it is kept in the cage. The bottom 102 may be provided with a carpet / cover for instance in the form of a silicone or rubber mat. The bottom 102 may be formed by a suitable material such as a polymeric, a metallic or a composite material. The bottom 102 may further be provided with openings and/or slots (not shown) for instance for permitting improved ventilation and for allowing the animal to see better out of the cage.

The top 104 of the animal cage 100 forms an upper restriction for the animal kept in the cage 100. The top 104 may be formed by a suitable material such as a polymeric, a metallic or a composite material. The top 104 may further be provided with openings and/or slots (not shown) for instance for permitting improved ventilation and for allowing the animal to see better out of the cage.

The animal cage 100 further comprises a frame assembly 106 connecting the bottom 102 to the top 104. The frame assembly 106 comprises a front portion 106a and a rear portion 106b. The front portion 106a and the rear portion 106b may be reciprocally moveable relative one another along a longitudinal direction L of the animal cage 100 such that a length of the animal cage 100 may be adapted. Length in the present disclosure is thus defined as measured along the longitudinal direction L. The animal cage 100 further comprises at least one resistance altering element 108 having at least one pre-set force state for altering a longitudinal force required for relative movement of the front 106a and rear portion 106b. A longitudinal force is to be interpreted as a force acting on the animal cage 100 in the longitudinal direction L or longitudinally directed component of a force acting on the animal cage, the force may be in the forward or rearward direction. A forward acting force is to be interpreted as a force acting in the longitudinal direction L and in the direction from the front portion 106a towards the rear portion 106b. A rearward acting force act oppositely is to be considered as acting in the longitudinal direction L and in the direction from the rear portion 106b towards the front portion 106a.

The animal cage 100 is intended to be arranged in a vehicle such that the longitudinal direction L is arranged along the travelling direction of the vehicle. It is however possible to arrange the animal cage 100 in other orientations as well. Regardless of the orientation of the animal cage 100, the cage 100 is by the reciprocal relative movement of the front and rear portion 106a, 106b capable of absorbing a force while reducing the risk of the animal cage 100 being damaged. Additionally, the resistance altering element 108 facilitates use of the animal cage 100 as the resistance can for instance be lowered to allow telescoping of the animal cage 100 for adaptation of the size of the animal cage 100 to the animal and/or to fit into the vehicle. The animal cage 100 can thus be adapted to suit a larger variety of animals and also be fitted into more vehicles.

The animal cage 100 may as is shown in Figure 1 be provided with a plurality of telescopic elements 110 which forms the side enclosure of the animal cage 100. A plurality of telescopic elements 110 may be provided on both lateral sides of the animal cage 100. The space between two adjacent telescopic elements 110 may be less than 10 cm, preferably less than 5 cm, thus preventing that the animal can escape from the animal cage 100 The space, i.e. the distance, between two adjacent telescopic elements 110 may be between 2 cm and 6 cm, between 3 cm and 5 cm and in one embodiment approximately 4 cm.

Each telescopic element 110 extends between the front portion 106a and the rear portion 106b of the frame arrangement 106 and functions as both a side enclosure of the animal cage 100 as well as a guide for the relative movement of the front portion 106a and rear portion 106b. Each telescopic element 110 may comprise a front telescopic portion 110a and a rear telescopic portion 110b being configured to be reciprocally moveable with the front and rear portion 106a, 106b respectively and telescopically engaged with each other. The front telescopic portion 110a being connected to the front portion 106a and the rear telescopic portion 110b being connected to the rear portion 106b. Preferably, the rear telescopic portion 110b in each telescopic element 110 is arranged partially interiorly of the front telescopic portion 110a, but the opposite relationship is also possible. The telescopic elements 110 as mentioned may form a guide for the telescopic movement of the animal cage 100.

In Figure 2 is the animal cage 100 shown in a left side view in a compressed state, i.e. when the front portion 106a and the rear portion 106b are as close as possible to each other. As is illustrated in Figure 2, the resistance altering element 108 may be arranged on a telescopic element 110. Naturally, more than one telescopic element 110 may be provided with a resistance altering element 108. A telescopic element 110 on each lateral side of the animal cage 100 may be provided with a resistance altering element 108, thus facilitating that both lateral sides of the are held in position with the equal force and that telescopic movement is even on both lateral sides of the animal cage 100.

Moreover, the bottom 102 of the animal cage 100 may comprise a front bottom portion 102a and a rear bottom portion 102b being configured to be reciprocally moveable with the front and rear portion 106a, 106b respectively and telescopically engaged with each other. The front bottom portion 102a being connected to the front portion 106a and the rear bottom portion 102b being connected to the rear portion 106b.

The front bottom portion 102b may at each lateral side thereof comprise a longitudinal bottom track 112 in which a corresponding bottom track member 114 on the rear bottom portion 102b is configured to be arranged and slide. In such an embodiment, the rear bottom portion 102b is preferably configured to be arranged at least partially underneath the front bottom portion 102a. While the foregoing is preferred, it is naturally however also possible to have the opposite arrangement, with the longitudinal bottom track 112 being arranged in the rear bottom portion 102b, the bottom track member 114 in the front portion 106a and the front bottom portion 102a being arranged at least partially underneath the rear bottom portion 102b.

The telescopic element 110 provided with the resistance altering element 108 may be arranged at a height from the bottom 102 of the animal cage 100 in the proximity of a corresponding height from the bottom 102 of the animal cage 100 of a center of gravity CG of said animal cage 100. The longitudinal force from one half of the animal cage 100 for instance from an impact may thus be transmitted essentially in the direction and along the extension of telescopic element 110 comprising the resistance altering element 108, thus facilitating reliable telescopic function.

The telescopic element 110 provided with the resistance altering element 108 may be arranged at a height from the bottom 102 of the animal cage 100 that is essentially half of a total height of the animal cage 100.

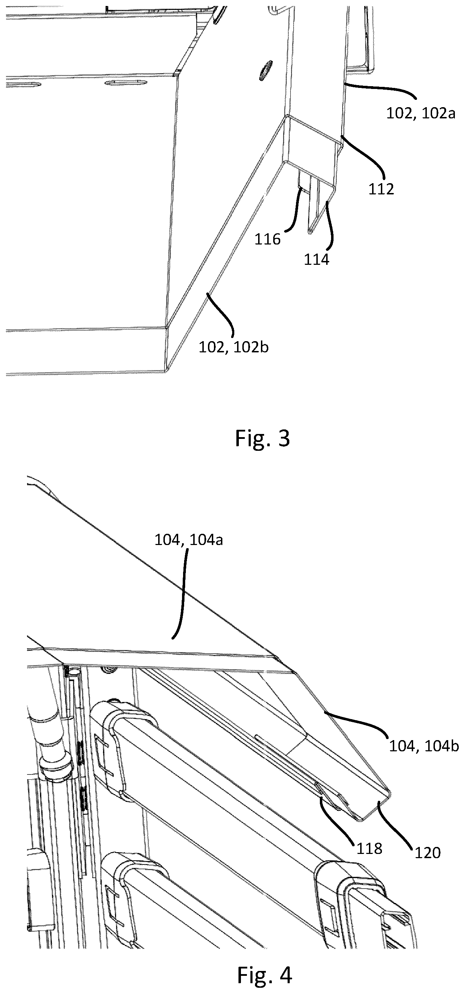

Figure 3 discloses a detail cross-sectioned view of the longitudinal bottom track 112 and the bottom track member 114. Preferably, the longitudinal bottom track 112 is formed by a plurality of folds in the front bottom portion 102a. The bottom track 112 may be formed by at least three folds such that a lip 116 is formed extending along the length of the bottom track 112, the lip 116 being configured to hold the bottom track member 114 in the bottom track 112 and prevent unintentional separation of the longitudinal bottom track 112 and bottom track member 114. Preferably, the longitudinal bottom track 112 is configured such that the bottom track member 114 can only be connected/disconnected from the longitudinal bottom track 112 by a movement in the longitudinal direction L. Each fold may be essentially 90°.

The bottom track member 114 is preferably formed by a plurality of folds in the rear bottom portion 102b, such that the bottom track member 114 can fit inside the longitudinal bottom track 112. Preferably the bottom track member 114 is formed by at least two folds. Each fold may be essentially 90°.

Moreover, the top 104 of the animal cage 100 may comprise a front top portion 104a and a rear top portion 104b being configured to be reciprocally moveable with the front and rear portion 106a, 106b respectively and telescopically engaged with each other. The front top portion 104a being connected to the front portion 106a and the rear top portion 104b being connected to the rear portion 106b.

Returning to Figure 2, the front top portion 104b may at each lateral side thereof comprise a longitudinal top track 118 in which a corresponding top track member 120 on the rear top portion 104b is configured to run. In such an embodiment, the rear top portion 104b is preferably configured to be arranged at least partially underneath the front top portion 104a. While the foregoing is preferred, it is naturally however also possible to have the opposite arrangement, with the longitudinal top track 118 being arranged in the rear top portion 104b, the top track member 120 in the front top portion 104a and the front top portion 104a being arranged at least partially above the rear top portion 104b.

Figure 4 discloses a detail cross-sectioned view of the longitudinal top track 118 and the top track member 120. Preferably, the longitudinal top track 118 is formed by a plurality of folds in the front top portion 104a. The longitudinal top track 118 may be formed by at least two folds in the front top portion 104a, thus providing a stable structure for the top track member 120 to slide in and to prevent unintentional separation of the longitudinal top track 118 and the top track member 120. Preferably, the longitudinal top track 118 is configured such that the top track member 120 can only be connected/disconnected from the longitudinal top track 118 by a movement in the longitudinal direction L. Each fold may be essentially 90°.

The top track member 120 is preferably formed by a plurality of folds in the rear top portion 104b, such that the top track member 120 can fit inside the longitudinal top track 118. Preferably the top track member 120 is formed by at least two folds. Each fold may be essentially 90°.

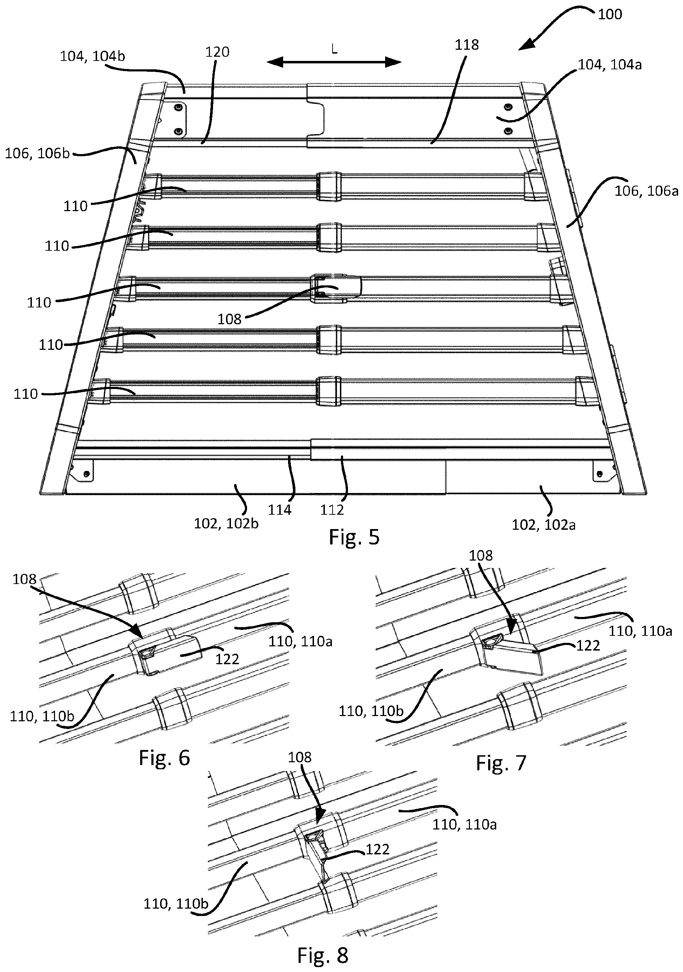

Figure 5 shows the animal cage 100 from a left side view in an expanded state, i.e. in which the front portion 106a and rear portion 106b have been moved away from each other in the longitudinal direction L such that the length of the animal cage 100 is longer than that of the animal cage 100 shown in Figure 1. It is to be realized that the front portion 106a and rear portion 106b of the animal cage 100 may be arranged in any relative position between a max expanded state as shown in Figure 5 and the compressed state shown in Figure 1.

The left and right lateral side of the animal cage 100 may in all embodiments disclosed herein be identical.

Figures 6 to 8 discloses detail views of a resistance altering element 108 as it is moved between a high force state, shown in Figure 6 and a low force state, shown in Figure 8. I.e. between two pre-set force states. As mentioned, the animal cage 100 may be provided with more than one resistance altering element 108. In the high force state is the longitudinal force, i.e. a force acting on the animal cage 100 in the longitudinal direction L, required for relative movement of the front portion 106a and the rear portion 106b high. The resistance altering element 108 shown in Figure 6 is as mentioned set in the high force state. The resistance altering element 108 may as is shown in Figures 6 to 8 comprise a clamp mechanism 122. The clamp mechanism 122 being actuatable by a user to switch the resistance altering element 108 between the high force state and the low force state. The clamp mechanism 122 may thus be configured to be set in a clamping state, corresponding to the high force state of the resistance altering element 108 and a released state corresponding to the low force state of the resistance altering element 108.

Preferably, when the resistance altering element 108, specifically the clamp mechanism 122 thereof, is set in the low force state, i.e. in the released state, the length of the animal cage 100 in the longitudinal direction L can be easily adjusted by pushing on either the front portion 106a and/or the rear portion 106b of the cage 100.

When the resistance altering element 108, or specifically the clamp mechanism 122 thereof, is set in the high force state, i.e. in the clamping state, a predetermined force in the longitudinal direction must be overcome to achieve relative movement of the front portion 106a and the rear portion 106b. The longitudinal force required for achieving relative movement of the front and rear portion in the high force state may in an embodiment correspond to at least half of a total weight of the animal cage. The longitudinal force that each resistance altering element 108 needs to withstand is thus equal to the total longitudinal force divided by the number of resistance altering elements 108 provided to the animal cage 100.

The longitudinal force required for achieving relative movement of the front and rear portion in the high force state may be between 50 N and 200 N depending on the weight of the animal cage 100, which may vary depending on if the animal cage 100 is manufactured for a large or small animal.

By providing a resistance altering element 108 as described in the foregoing, the animal cage 100 can be adjusted in size as desired by a user without risking that the telescopic function and safety of the animal cage 100 is compromised. When the desired size is achieved, the user places the resistance altering element 108 in the high force state whereby the intended functionality and safety of the animal cage 100 can be provided in case of an accident. The provision of the resistance altering element 108 having a high force and low force state reduces the risk of the telescoping function not working as intended and thus increases the safety and ease of use of the animal cage 100. These functionalities may be even further improved by embodiments and features described in following.

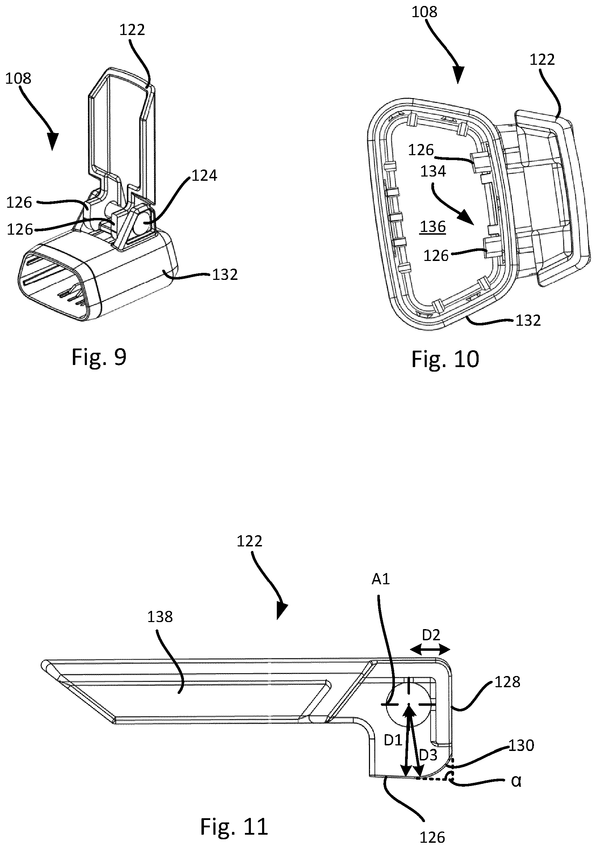

Figure 9 discloses a perspective detail view of a resistance altering element 108 in the low force state. As shown, each resistance altering element 108 may comprise a base portion 132 being configured to be arranged on a telescopic element 110. The base portion 132 forms a support for a clamping mechanism 122 which may be attached to the base portion by means of a rotation pin 124 forming a rotation axis A1 (shown in Figure 11) around which the clamping mechanism 122 can rotate to set the resistance altering element 108 in the high force state and the low force state respectively.

The base portion 132 is preferably attached to the front telescopic portion 110a of the associated telescopic element 110.

As is illustrated in Figure 10, the clamp mechanism 122 is configured to alter a pressure applied to an interface 134 for controlling an induced friction force thus altering the longitudinal force required for relative movement of the front portion 106a and the rear portion 106b. The interface 134 is to be interpreted as the contact area between the clamp mechanism 122 and the associated telescopic element 110. In Figure 10, the telescopic element 110 is omitted for clarity, it is however illustrated how the clamping mechanism 122 and specifically a first cam surface 126 thereof protrudes into a space 136 in the base portion 132 through which the telescopic element 110 extends thus generating a force against a telescopic element 110 arranged in the space 136.

The resistance altering element 108 is arranged with the base portion 122 on either the front telescopic portion 110a or the rear telescopic portion and such that the clamping mechanism 122 can induce a force on the one of the front telescopic portion 110a and the rear telescopic portion 110b on which the base portion 132 is not arranged. A friction force can thus be attained between the front telescopic portion 110a and the rear telescopic portion 110b.

Figure 11 show a side view of a clamping mechanism 122. The clamping mechanism 122 may be provided with a lever portion 138 which the user can move between a clamping state, corresponding to the high force state of the resistance altering element 108, and a released state, corresponding to the low force state of the resistance altering element 108, of the clamping mechanism 122. In the high force state, the lever portion 138 may be arranged adjacent to and/or abutting against the base portion 132 thus forming a predetermined position and force between the resistance altering element 108 and the telescopic element 110.

As is illustrated, the clamp mechanism 122 may comprise a first cam surface 126. The first cam surface 126 is preferably arranged at a first distance D1 as measured perpendicularly from the first cam surface 126 to the rotation axis A1 around which the clamp mechanism is configured to rotate. The distance D1 is larger than the corresponding distance between the rotation axis A1 and the telescopic element 110, thus ensuring that the clamp mechanism 122 applies a pressure on the telescopic element 110 when in the clamping state, i.e. in the high force state of the resistance altering element 108. The first cam surface 126 may be a flat surface as illustrated in Figure 11, however it could also be curved or have another shape as well.

A release surface 128 may further be provided being arranged at an angle α in relation to the first cam surface 126. The release surface 128 being arranged at a second distance D2 from the rotation axis A1 as measured perpendicularly from the release surface 128. The second distance D2 being less than the first distance D1. The second distance D2 is preferably equal to or less than a corresponding distance from the rotational axis A1 to the associated telescopic element 110, thus ensuring that only little or no pressure is provided by the cam mechanism 122 to the telescopic element 110 in the released state i.e. in the low force state of the resistance altering element 108. The angle A between the first cam surface 126 and the release surface 128 may be less than 90°, however other angles A are naturally also possible. The angle A defines the amount of rotation of the clamp mechanism 122 that is needed to move it between the clamping state, i.e. the high force state of the resistance altering element 108, and the released state, i.e. the low force state of the resistance altering element 108.

A second cam surface 130 may further be provided, the second cam surface 130 being curved and arranged at a third distance D3 from the rotation axis A1, the distance D3 being defined as the largest distance from the second cam surface 130 to the rotation axis A1. The second cam surface 130 forms a transition between the first cam surface 126 and the release surface 128. The third distance D3 may be equal to or more than the first distance D1, thus providing a knuckle that the clamp mechanism 122 has to be rotated past to get from the clamping state to the released state or vice versa. The clamp mechanism 122 can thus be locked in the clamping state, i.e. in the high force state of the resistance altering element 108, and/or in the released state, i.e. in the low force state of the resistance altering element 108.

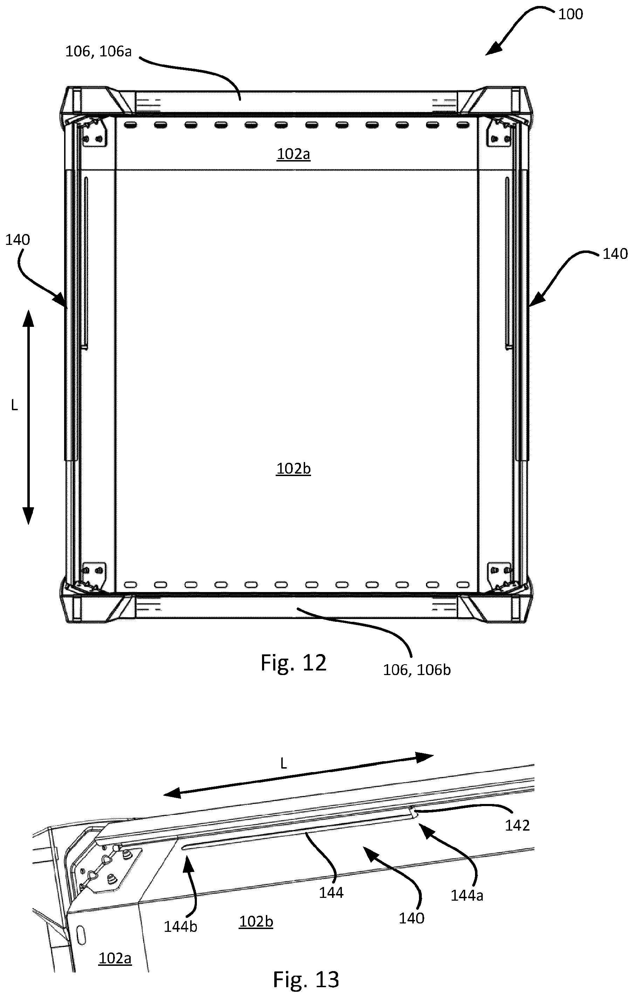

In Figure 12 is the animal cage 100 shown in a compressed state and from a bottom view. The embodiment shown in Figure 12 is combinable with all other embodiments disclosed herein. The animal cage 100 in Figure 12 comprises a stop element 140 being configured to form a limit for the telescopic movement of the front 106a and rear portion 106b such that the front portion 106a and rear portion 106b cannot move past a first relative position. The first relative position may as is shown in Figure 12 be the compressed position of the animal cage which defines the closest relative position of the front portion 106a and the rear portion 106b during regular use of the animal cage 100. The stop element 140 is further configured to allow relative movement of the front portion 106a and rear portion 106b past the first relative position when the animal cage 100 is subjected to a force in the longitudinal direction L being higher than a threshold value, for instance in the case of an accident.

As is illustrated in Figure 12, a respective stop element 140 may be provided on each lateral side of the animal cage 100. While in Figure 12 the stop element 140 is shown being arranged in the bottom 102 of the animal cage 100, it may also or alternatively be provided in the top 104.

Moreover, a stop element 140 may alternatively or in addition be provided in a front telescopic portion 110a and/or rear telescopic portion 110b in at least one of the at least one telescopic element 110 such that movement of the front portion 106a and the rear portion 106b past the first relative position is only possible when the animal cage 100 is subjected to a force in the longitudinal direction being higher than the threshold value.

Figure 13 discloses a detail view of a stop element 140, which as mentioned could be provided in one or more of the bottom 102, top 104 and one or more of the telescopic elements 110.

Each stop element 140 may comprise at least one pin 142 being configured to be sheared of by telescopic movement between the front portion 106a and rear portion 106b in case the animal cage 100 is subjected to a force in the longitudinal direction L being higher than the threshold value.

The pin 142 may be configured to cooperate with a slot 144 such that the extension of the slot 144 defines the first position and such that the pin 142 is configured to be sheared by engagement with an end 144a of the slot. The slot 144 further comprises a second end 144b defining a second position, where the front portion 106a and rear portion 160b of the animal cage 100 are arranged as far apart as possible in the longitudinal direction L as illustrated in Figure 5. As such, the pin 142 may be configured to shear to allow the animal cage 100 to expand past the second position as well. Additionally, the cooperation of the groove 144 and the pin 142 in each stop element 140 provides additional guiding of the reciprocal movement of the front portion 106a and the rear portion 106b of the animal cage 100.

The threshold longitudinal force acting on the animal cage 100 required for shearing the pin 142 in all stop elements 140 provided on the animal cage 100 may correspond to half of the weight of the animal cage 100. The threshold longitudinal force acting on the animal cage 100 required for shearing the pin 142 in all stop elements 140 may be between 50 N and 200 N.

The threshold longitudinal force required for shearing the pin 142 in all stop elements 140 may in one embodiment be less than the longitudinal force required for achieving relative movement of the first and rear portion 106a, 106b in the high force state of the resistance altering element 108, thus ensuring that the resistance altering element 108 controlling the maximum longitudinal force required for reciprocal relative movement of the front and rear portion 106a, 106b.

The threshold longitudinal force acting on the animal cage 100 required for shearing the pin 142 in all stop elements 140 may in one embodiment be higher than the longitudinal force required for relative movement of the first and rear portion 106a, 106b when the resistance altering element 108 is in the low force state. It may thus be prevented that the pin 142 is sheared by accident by a user adjusting the size of the animal cage 100.

The pin 142 in each stop element 140 may be configured to be sheared before plastic deformation is achieved in the slot 144, thus reducing the risk of damage to the animal cage 100 in case of shearing of the pin 142.

The pin 142 in each stop element 140 may further be releasably attached to the animal cage 100 such that it can be replaced once it has been sheared or otherwise has been damaged.

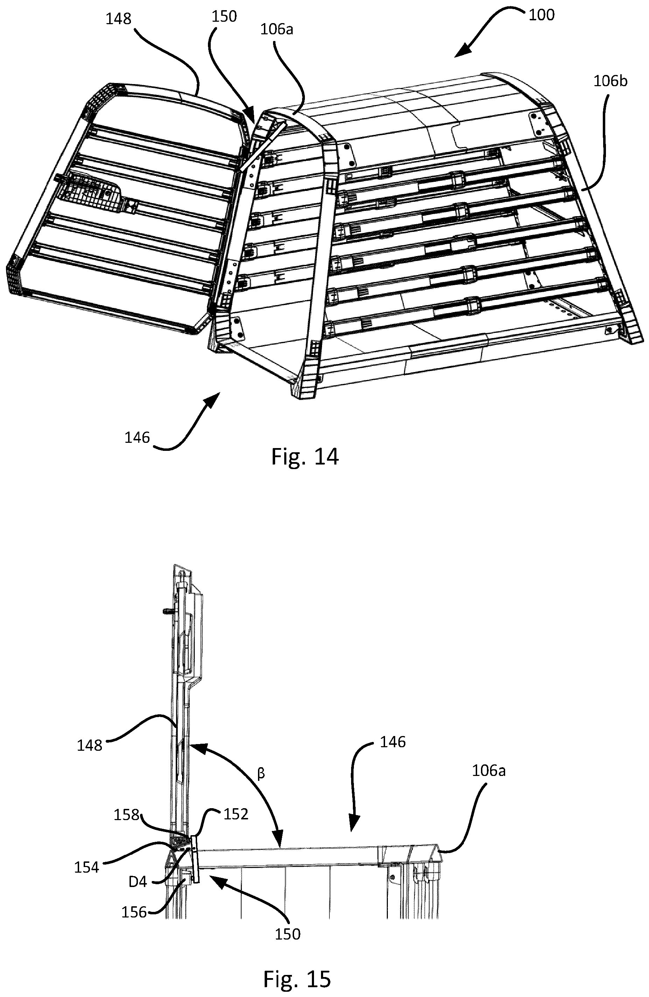

Figure 14 discloses perspective view of the animal cage 100. The animal cage 100 is illustrated as a telescoping animal cage 100 as described in the foregoing and is as such applicable to the foregoing embodiments, but the teachings below are equally applicable to another type of animal cage 100 as well, for instance one without a front and rear portion 106a, 106b which are moveable in relation to one another.

As illustrated, the animal cage 100 in Figure 14 comprises a cage access opening 146 at least in the front portion 106a of the animal cage 100. It is to be realized that an access opening 146 may also be provided in the rear portion 106b of the animal cage 100.

The cage access opening 146 is formed in the front portion 106a of the frame arrangement 106. The animal cage 100 further comprising an access door 148 arranged in the access opening 146 and being pivotable in relation to the front portion 106a. The animal cage 100 further comprises an access door motion control mechanism 150 being configured to provide a moment of force, i.e. a rotational force or torque, that varies with the opening angle β (shown in Figure 15) of the access door 148.

In Figure 15, the animal cage 100 is shown in a bottom cross-sectioned view. The motion control mechanism 150 may comprise a so called constant force spring 152, providing an essentially constant force in the axial direction of the constant force spring 152 applied between the animal cage 100 and the access opening door 148 regardless of the axial length of the constant force spring 152. The constant force spring 152 in the present disclosure is configured to provide a pushing force acting on the access door 148. The constant force spring 152 may be a gas spring, providing an axial force that only varies to a small extent as a function of a change in the axial length thereof. Another type of spring is also considered however, the teachings herein are not limited to only constant force springs as defined in the foregoing but other types of actuating elements may also be used. It is further to be realized that the constant force spring 152 may be configured to provide a damping effect, for instance to prevent that the movement of the access door 148 is too fast.

The constant force spring 152 is configured to increase the moment of force provided to the access door 148 in the opening direction with increasing opening angle β of the access door 148. This may be achieved by the relative position of a first motion control mechanism attachment 156 and a second motion control mechanism attachment 158 changing in accordance with the opening angle β of the access door 148. The first motion control mechanism attachment 156 being arranged on the frame assembly 106 and/or on the top 102 of the animal cage 100. The second motion control mechanism attachment 158 being arranged on the access opening door 148. The motion control mechanism 150, specifically the constant force spring 152 thereof, extends between the first and second motion control mechanism attachments 156, 158.

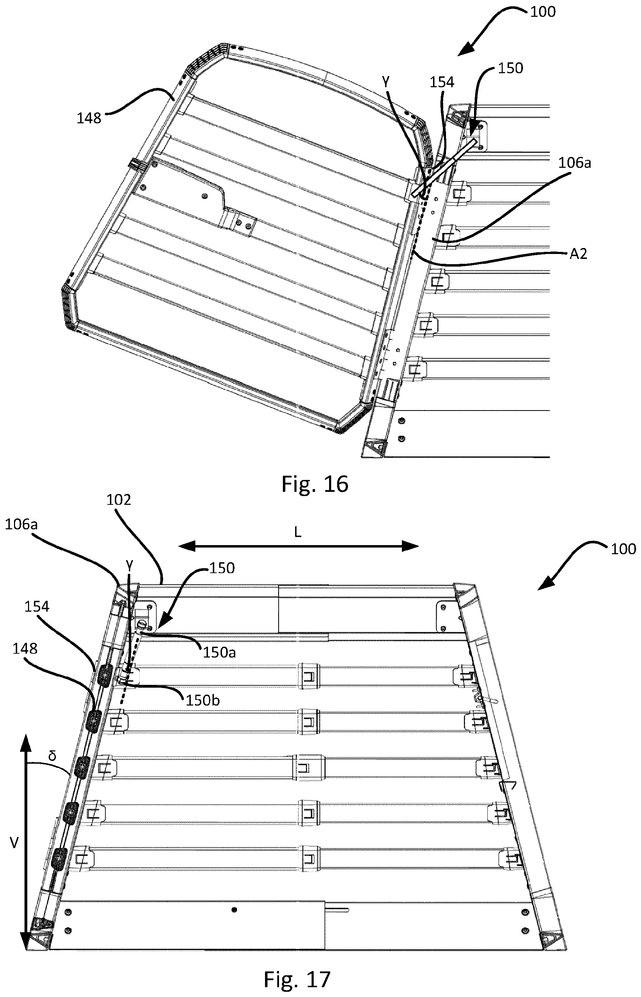

The rotational moment of force generated by the access door motion control mechanism 150 acting on the access door 148 may be considered as the outwardly directed component of the total axial force provided by the motion control mechanism 150 times a lever arm distance D4, D4 being defined as the distance measured perpendicularly from the axial direction of the motion control mechanism 150 to the hinge 154. Outwardly directed in the present disclosure is to be interpreted as the component of the axial force of the motion control mechanism 150, or the constant force spring 152 thereof, directed perpendicularly in relation to the rotational axis of the hinge 154 as observed from the side as in Figure 16. Preferably, the rotational axis of the hinge 154 is parallel with the plane of the front portion 106a of the frame assembly 106. The lever arm distance D4 between the hinge 154 of the access door 148 and the axial direction of the motion control mechanism 150 may increase with increased opening angle at least between 0° and 90° opening angle thereof.

As is further illustrated in Figure 16 which shows a cross-sectioned side view of the animal cage 100 with the access door 148 open, the outwardly directed force component of the total axial force of the motion control mechanism 150 may be estimated as the total axial force * sin γ, where the angle γ is the angle between the rotational axis A2 of the hinge 154 as observed from the side (specifically the orientation of the axis around which the hinge 154 rotates) and the axial direction of the motion control mechanism 150. As mentioned, the rotational axis A2 of the hinge 154 is preferably parallel with the plane of the first portion 106, the angle γ may thus also correspond to the angle between the plane of the first portion 106a and the axial direction of the motion control mechanism 150.

Figure 17 discloses a cross-sectioned side view of the animal cage 100 with the access door 154 closed. As illustrated in Figure 17, the angle γ when the access door 148 is closed is significantly less than when the door 148 is open as in Figure 16. The rotational moment of force will thus increase during the opening of the access door 148.

As is further illustrated in Figure 17 the hinge 154 of the access door 148 is arranged at an angle δ in relation to a vertical direction V such that the access door 148 in opening angles less than 90° is biased into the closed position. The angle δ may be between 5° and 30°, in one embodiment between 10° and 20°. The access door 148 is thus biased by the weight thereof into the closed position at opening angles less than 90°, with an increasing closing moment of force as the access door 148 nears the closed position. The combination of the inclined arrangement of the access door 148 and the motion control mechanism 150 which gradually decreases its opening moment of force on the access door 148 as it closes provides a self-closing effect where the access door 148 can be let go of in order to let it self-close, while the motion control mechanism 150 overcomes the closing moment of force from the weight of the access door 148 at larger opening angles such that the access door 148 is opened and held open. The motion control mechanism 150 may be configured to overcome the weight of the access door 148 at opening angles β being larger than 20° as measured from the closed position of the access door 148.

One or both ends 150a, 150b of the constant force spring 152 may be attached to the animal cage by means of a ball joint. I.e. the interface between the first motion control mechanism attachment 156 and/or the second motion control mechanism attachment 158 respectively and the constant force spring 152 may be formed by a ball joint.

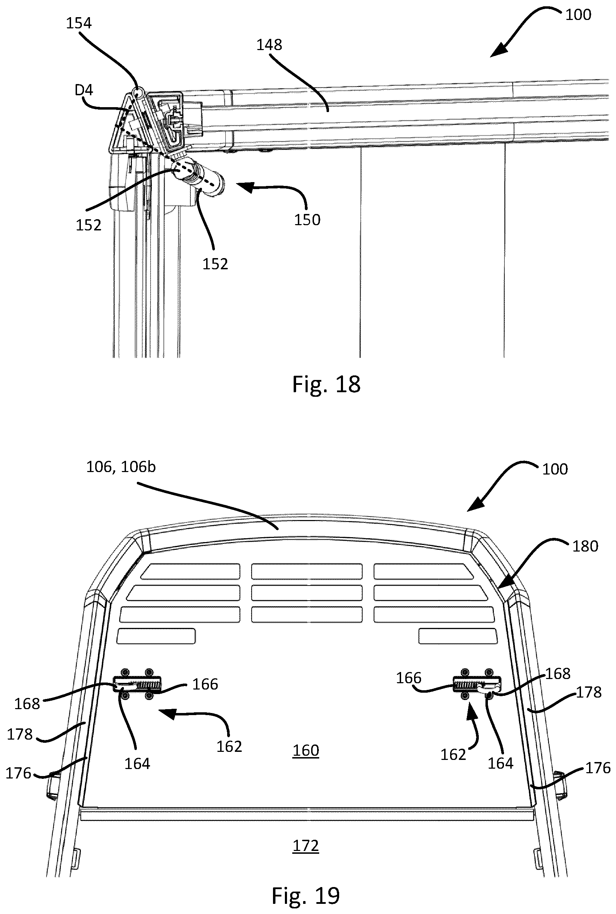

In Figure 18 is a bottom cross-sectioned view of the animal cage 100 with the access door 148 closed shown. As mentioned in the foregoing, the lever arm distance D4 between the hinge 154 of the access door and the axial direction, illustrated by the dotted line in Figure 18, of the motion control mechanism 150 increases with increased opening angle β of the access door 148 at least between 0° and 90° opening angle β thereof. In the present disclosure, the lever arm distance D4 is to be considered positive if it contributes to an opening moment of force on the access door 148.

Further Illustrated in Figure 18 is that the lever arm distance D4 may be such that the motion control mechanism 150 provides a closing moment of force in a closed position of the access door 148. The orientation of the motion control mechanism 150, preferably the constant force spring 152 thereof, may be configured to change during the movement of the door 148 such that the lever arm distance D4 turns from positive to negative at an opening angle β of the access door 148 between 0° and 45°. As realized by the formula in discussed in the foregoing, a negative lever arm distance D4 provides a closing moment of force acting on the access door 148 by the motion control mechanism 150. Accordingly, the motion control mechanism 150 may facilitate closing of the access door 148.

Further illustrated in Figure 18 is that the hinge 154 may be arranged on an opposite side of the access door 148 in relation to the second motion control mechanism attachment 158, thus forming semicircular movement of the second motion control mechanism attachment 158 around the rotational axis of the hinge 154 which defines the axial direction of the motion control mechanism 150.

As such, the moment of force on the access control door 148 provided by the motion control mechanism 150 may be defined as a function of the position of the second motion control mechanism attachment 158 in relation to the hinge 154, where the second motion control mechanism attachment 158 movement is defined by the opening angle of the access door 148 and moves therewith along a radius as measured between the second motion control mechanism attachment 158 and the hinge 154.

In Figure 19 is a rear view of an animal cage 100 shown. The animal cage may be considered as a telescoping animal cage 100 as described in the foregoing and is as such applicable to the foregoing embodiments, but the teachings below are equally applicable to another type of animal cage 100 as well, for instance one without a front and rear portion 106a, 106b which are moveable in relation to one another.

As illustrated in Figure 19, the animal cage 100 comprises at least one animal evacuation hatch 160 configured to allow extraction of the animal kept in the cage 100 in case of emergency, the animal evacuation hatch 160 comprising a latching arrangement 162 being configured to secure the evacuation hatch 160 in relation to the frame assembly 106 such that the evacuation hatch 106 can be locked in place automatically by the latching arrangement 162 when brought into a predetermined position in relation to the frame assembly 106. Automatically in the present disclosure is to be interpreted as that the latching arrangement 162 is arranged in the locked position and held there without the user having to manually tighten or manipulate the latching arrangement 160 once the evacuation hatch 160 is in the predetermined position. Preferably, the predetermined position is the closed position in relation to the animal cage 100 as illustrated in Figure 19. The evacuation hatch 160 is preferably made from a metallic material such as aluminum or steel, however it may just as well be manufactured from a polymer material or composite material.

The evacuation hatch 160 may be arranged in the rear portion 106b of the animal cage 100 as shown, but naturally can other positions of the evacuation hatch 160 also be considered part of the disclosure. The evacuation hatch 160 is preferably removeable such that an evacuation opening 180 is made accessible to a user for evacuation of an animal in the cage 100.

A latching arrangement 162 may be provided at least at each lateral side of the evacuation hatch 160. Naturally, a latching arrangement 162 may also or alternatively be arranged on the upper part or lower part of the evacuation hatch 160.

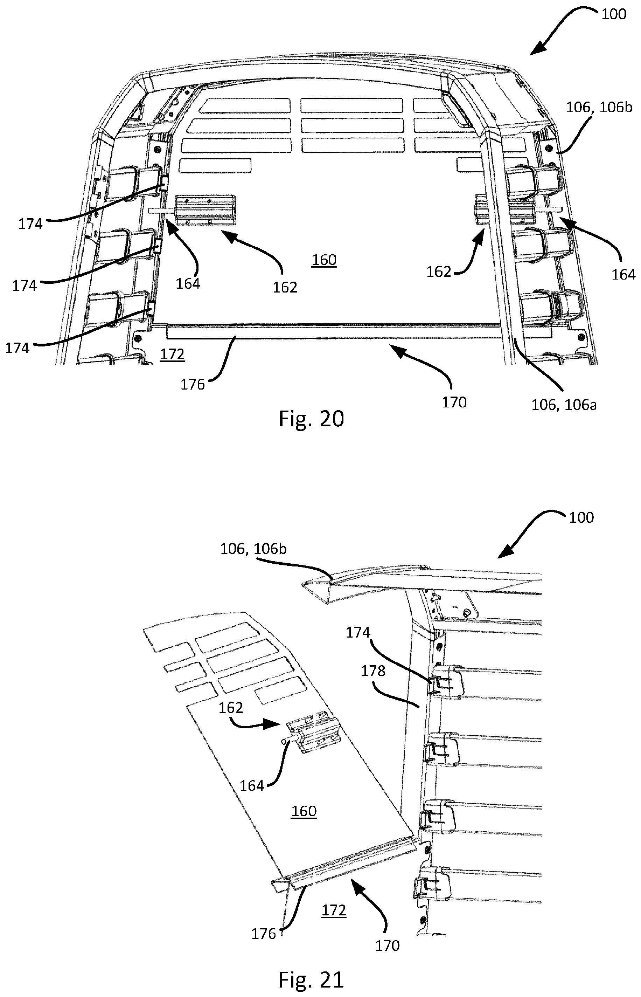

Each latching arrangement comprises a respective latching pin 164. Each latching pin 164 may be provided with a handle 168 such that it can be manipulated and moved by a user from an extended (i.e. locked) position, as shown in Figure 19, to a retracted (i.e. unlocked) position as shown in Figure 21 where the evacuation hatch 160 can be moved out of the predetermined closed position.

Each latching pin 164 may be biased into the extended position in which the evacuation hatch 160 is locked in place. Each latching arrangement 150 may thus comprise a spring 166, providing a biasing force to the associated latching pin 164 into the extended position.

The evacuation hatch 160 may comprise a lateral flange 176 arranged on each lateral side of the evacuation hatch 160. Each lateral flange 176 extending at an angle in relation to the remainder of the evacuation hatch 160 such that the two lateral flanges 176 together may form a stop for a movement of the evacuation hatch 160 in the longitudinal direction L towards the front portion 106a of the animal cage 100. The total width of the evacuation hatch 160 including the lateral flanges 176 may thus be larger than a corresponding width of the evacuation opening 180.

The rear portion 106b may comprise laterally opposite abutment surfaces 178 being inclined such that a horizontal distance, i.e. the width of the evacuation opening 180, between the opposite abutment surfaces 178 decreases in the longitudinal direction L towards the front portion 106. Each latching pin 164 in an extended position thereof is configured to make contact with a respective one of the opposite abutment surfaces 178, thus providing a lateral force to the respective latching pin 164 as the evacuation hatch 160 is pushed towards the closed predetermined position. When the latching pins 164 move past the rear portion 106b, they snap into the extended position and lock the evacuation hatch 160 in place.

In Figure 20, the animal cage 100 is shown in a front perspective view with the access door removed for clarity. The latching pins 164 are in their respective extended position. As illustrated, in the extended position, each latching pin 164 is arranged in a locked position in relation to the rear portion 106b of the frame arrangement 106. The evacuation hatch 160 can thus not be removed from the animal cage 100.

Further illustrated in Figure 20 is that the evacuation hatch 160 may comprise a lower flange 176 extending along a lower edge 170 of the evacuation hatch 160. The lower flange 176 is configured to form a stop for preventing the lower edge 170 of the evacuation hatch 160 to move in the longitudinal direction L rearwardly away from the front portion 106a of the frame arrangement 106. The lower flange 176 and the latching arrangement 162 thus in cooperation forms a lock for preventing the evacuation hatch 160 to be removed from the animal cage 100. The lower flange 176 may be configured to be arranged in front of, i.e. on the side facing the front portion 160a, of a lower panel 172 of the animal cage 100. Alternatively, the lower flange 176 may cooperate with the rear portion 106b of the frame arrangement 106. The lower flange 176 preferably forms a stepped profile as the lower flange 176 is parallel to but offset from the plane in which the remainder of the evacuation hatch 160 extends. The stepped profile formed by the lower flange 176 may form a pivot point, facilitating removing and attaching the evacuation hatch 160.

The animal cage 100 may further comprise a stop 174 arranged on or in connection to the rear portion 106b of the frame arrangement 106. The stop 174 may be formed from a polymeric and/or plastic material and may in one embodiment form a part of an attachment for attaching a telescopic element 110 to the frame arrangement 106. A plurality of stops 174 may be arranged on each lateral side of the evacuation hatch 160. Each stop 174 being configured to abut against the evacuation hatch 160 and/or to prevent it from moving forwards and into the animal cage 100.

Figure 21 shows a perspective cross-sectioned view of an animal cage 100 with the evacuation hatch 160 being moved out of the predetermined closed position. The evacuation hatch 160 is preferably configured to, when moved out of the predetermined closed position, to be removed from the animal cage in an upwardly and/or rearwardly direction, as such a movement of the evacuation hatch 160 is generally most convenient and most likely to be possible in a rear luggage space of a vehicle.

The lower flange 176 forming a stepped profile allowing the evacuation hatch 160 to pivot around the lower panel 172 facilitates the removal and attachment of the evacuation hatch 160. Moreover, as mentioned, the lower flange 176 forms a lock together with the latching arrangement 162 for preventing the evacuation hatch to move away from the front portion 106a, i.e. in the rearward longitudinal direction.

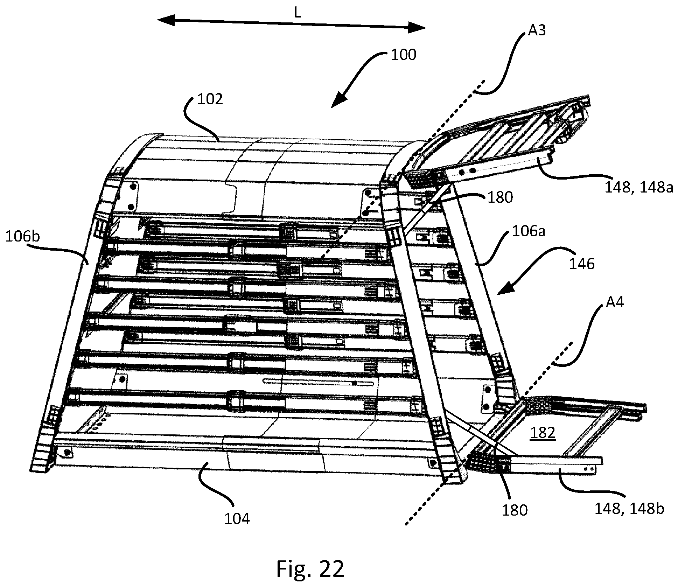

Figure 22 discloses a perspective view of an animal cage 100 suitable for use for transportation of an animal in a vehicle. The animal cage 100 comprising:
- a bottom 102,
- a top 104,
- a frame assembly 106 connecting the bottom 102 to the top 104, the frame assembly 106 comprising a front portion 106a and a rear portion 106b,
- an access opening 146 being provided in the front portion 106a and/or the rear portion 106b, and
- an access door 148 arranged in the access opening, the access door 148 having an upper portion 148a and a lower portion 148b being individually moveable between an open position and a closed position in relation to the access opening 146, wherein the upper portion 148a is configured to pivot around an upper pivot axis A3 and the lower portion 148b is configured to pivot around a lower pivot axis A4. The front portion 106a and the rear portion 106b may be configured to be reciprocally moveable as described in the foregoing.

The lower portion 148b in the open position thereof may be configured to be arranged essentially parallel with the bottom 104 of the animal cage 100. As such, the lower portion 148b may essentially form an extension of the bottom 104 in the longitudinal direction L of the animal cage 100. The lower portion 148b may be provided with a support surface 182 for providing a surface onto which an animal kept in the animal cage 100 can be arranged for facilitating extraction of the animal out of the animal cage 100.

The height of the lower portion 148b may be essentially one third of a total height of the access opening 146.

The upper portion 148a and/or the lower portion 148b may be connected to the animal cage 100 by means of a control member 180, the control member 180 may be a gas spring or a gas cylinder or another equivalent component suitable for controlling the movement of the associated lower portion 148b and/or upper portion 148a. One control member 180 may be provided to each lateral side of the upper and lower portion 148a, 148b respectively. The control member 180 may be configured to define the open position of the associated upper portion 148a, 148b of the access door 148. The control member 180 extends from the respective one of the upper portion 148a and the lower portion 148b to the front portion 106a or the rear portion 106b of the animal cage 100.

The upper pivot axis A3 and the lower pivot axis A4 are preferably essentially perpendicular to a longitudinal direction L of the animal cage. The upper pivot axis A3 is the axis around which the upper portion 148a of the access door 148 is hinged and the lower pivot axis A4 is the axis around which the lower portion 148b is hinged.

It is to be understood that the present invention is not limited to the embodiments described above and illustrated in the drawings; rather, the skilled person will recognize that many changes and modifications may be made within the scope of the appended claims.

## Claims

1. An animal cage (100) suitable for use for transportation of an animal in a vehicle, said animal cage (100) comprising:
- a bottom (102),
- a top (104),
- a frame assembly (106) connecting the bottom (102) to the top (104), the frame assembly (106) comprising a front portion (106a) and a rear portion (106b), the front portion (106a) and rear portion (106b) being reciprocally moveable relative one another along a longitudinal direction (L) of the animal cage (100) such that a length of the animal cage (100) may be adapted and wherein the animal cage (100) comprises at least one resistance altering element (108) **characterized by** the at least one resistance altering element (108) having at least one pre-set force state for altering a longitudinal force required for relative movement of the front (106a) and rear portion (106b), wherein the resistance altering element (108) can be set to at least a high force state in which the longitudinal force required for relative movement of the front portion (106a) and rear portion (106b) is high and a low force state in which the longitudinal force required for relative movement of the front portion (106a) and rear portion (106b) is low relative to the high force state.

2. The animal cage (100) according to claim 1, wherein the resistance altering element (108) comprises a clamp mechanism (122) configured to alter a pressure applied to an interface (134) for controlling an induced friction force thus altering the longitudinal force required for relative movement of the front portion (106a) and rear portion (106b).

3. The animal cage (100) according to any one of the preceding claims, wherein the frame assembly (106) comprises at least one telescopic element (110) extending between the front portion (106a) and the rear portion (106b) and wherein at least one of the at least one telescopic element (110) is provided with the resistance altering element (108).

4. The animal cage (100) according to claim 3, wherein the frame assembly (106) comprises a plurality of telescopic elements (110) provided on each lateral side of the animal cage (100).

5. The animal cage (100) according to claim 3 or 4, wherein at least one telescopic element (110) on each lateral side of the animal cage (100) is provided with a resistance altering element (108).

6. The animal cage (100) according to claim 2, wherein the clamp mechanism (122) is configured to be set in a clamping state in which the pressure applied to the interface (134) is high and in a released state in which the pressure applied to the interface (134) is low, relative thereto.

7. The animal cage (100) according to any one of the preceding claims, wherein the resistance altering element (108) comprises a cam surface (126) configured to alter the force required for telescopic movement of the front and rear portion (106b).

8. The animal cage (100) according to claim 7 when dependent on claim 2, wherein the clamp mechanism (122) controls the position of the cam surface (126).

9. The animal cage (100) according to claim 1, wherein the longitudinal force required for achieving relative movement of the front portion (106a) and rear portion (106b) in the high force state corresponds to at least half of a total weight of the animal cage (100).

10. The animal cage (100) according to claim 9, wherein the longitudinal force required for achieving relative movement of the front portion (106a) and rear portion (106b) in the high force state is between 50 N and 200 N.

11. The animal cage (100) according to claim 5, wherein the telescopic element (110) provided with the resistance altering element (108) is arranged at a height from the bottom (102) of the animal cage (100) in the proximity of a height from the bottom (102) of the animal cage (100) of a center of gravity of said animal cage (100).

12. The animal cage (100) according to claim 5, wherein the telescopic element (110) provided with the resistance altering element (108) is arranged at a height from the bottom (102) of the animal cage (100) that is essentially half of a total height of the animal cage (100).

13. The animal cage (100) according to any one of the preceding claims, wherein the animal cage (100) further comprises a stop element (140) being configured to form a limit for the relative movement of the front portion (106a) and rear portion (106b) such that the front portion (106a) and rear portion (106b) cannot move past a first relative position and wherein the stop element (140) is configured to allow movement of the front portion (106a) and rear portion (106b) past the first relative position when the animal cage (100) is subjected to a longitudinal force being higher than a threshold value.

14. The animal cage (100) according to claim 13, wherein the threshold value of the longitudinal force is at least half of the weight of the animal cage (100).

## Patentansprüche

1. Tierkäfig (100), der zur Verwendung für einen Transport eines Tieres in einem Fahrzeug geeignet ist, der Tierkäfig (100) umfassend:
- einen Boden (102),
- eine Oberseite (104),
- eine Rahmenanordnung (106), die den Boden (102) mit der Oberseite (104) verbindet, die Rahmenanordnung (106) umfassend einen vorderen Abschnitt (106a) und einen hinteren Abschnitt (106b), wobei der vordere Abschnitt (106a) und der hintere Abschnitt (106b) wechselseitig relativ zueinander entlang einer Längsrichtung (L) des Tierkäfigs (100) derart bewegbar sind, dass eine Länge des Tierkäfigs (100) angepasst werden kann, und wobei der Tierkäfig (100) mindestens ein widerstandsveränderndes Element (108) umfasst, **gekennzeichnet durch** das mindestens eine widerstandsverändernde Element (108), das mindestens einen voreingestellten Kraftzustand zum Verändern einer Längskraft aufweist, die für eine Relativbewegung des vorderen (106a) und des hinteren Abschnitts (106b) erforderlich ist, wobei das widerstandsverändernde Element (108) auf mindestens einen hohen Kraftzustand, in dem die Längskraft, die für die Relativbewegung des vorderen Abschnitts (106a) und des hinteren Abschnitts (106b) erforderlich ist, hoch ist, und einen niedrigen Kraftzustand eingestellt werden kann, in dem die Längskraft, die für die Relativbewegung des vorderen Abschnitts (106a) und des hinteren Abschnitts (106b) erforderlich ist, relativ zu dem hohen Kraftzustand niedrig ist.

2. Tierkäfig (100) nach Anspruch 1, wobei das widerstandsverändernde Element (108) einen Klemmenmechanismus (122) umfasst, der konfiguriert ist, um einen Druck, der auf eine Schnittstelle (134) ausgeübt wird, zu verändern, zum Steuern einer induzierten Reibungskraft und somit zum Verändern der Längskraft, die für die Relativbewegung des vorderen Abschnitts (106a) und des hinteren Abschnitts (106b) erforderlich ist.

3. Tierkäfig (100) nach einem der vorstehenden Ansprüche, wobei die Rahmenanordnung (106) mindestens ein Teleskopelement (110) umfasst, das sich zwischen dem vorderen Abschnitt (106a) und dem hinteren Abschnitt (106b) erstreckt, und wobei mindestens eines des mindestens einen Teleskopelements (110) mit dem widerstandsverändernden Element (108) versehen ist.

4. Tierkäfig (100) nach Anspruch 3, wobei die Rahmenanordnung (106) eine Vielzahl von Teleskopelementen (110) umfasst, die an jeder lateralen Seite des Tierkäfigs (100) bereitgestellt sind.

5. Tierkäfig (100) nach Anspruch 3 oder 4, wobei mindestens ein Teleskopelement (110) an jeder lateralen Seite des Tierkäfigs (100) mit einem widerstandsverändernden Element (108) versehen ist.

6. Tierkäfig (100) nach Anspruch 2, wobei der Klemmenmechanismus (122) konfiguriert ist, um in einen Klemmzustand, in dem der Druck, der auf die Schnittstelle (134) ausgeübt wird, hoch ist, und in einen gelösten Zustand eingestellt zu werden, in dem der Druck, der auf die Schnittstelle (134) ausgeübt wird, relativ dazu niedrig ist.

7. Tierkäfig (100) nach einem der vorstehenden Ansprüche, wobei das widerstandsverändernde Element (108) eine Nockenoberfläche (126) umfasst, die konfiguriert ist, um die Kraft, die für eine Teleskopbewegung des vorderen und des hinteren Abschnitts (106b) erforderlich ist, zu verändern.

8. Tierkäfig (100) nach Anspruch 7, wenn abhängig von Anspruch 2, wobei der Klemmenmechanismus (122) die Position der Nockenoberfläche (126) steuert.

9. Tierkäfig (100) nach Anspruch 1, wobei die Längskraft, die zum Erreichen der Relativbewegung des vorderen Abschnitts (106a) und des hinteren Abschnitts (106b) in dem hohen Kraftzustand erforderlich ist, mindestens der Hälfte eines Gesamtgewichts des Tierkäfigs (100) entspricht.

10. Tierkäfig (100) nach Anspruch 9, wobei die Längskraft, die zum Erreichen der Relativbewegung des vorderen Abschnitts (106a) und des hinteren Abschnitts (106b) in dem hohen Kraftzustand erforderlich ist, zwischen 50 N und 200 N liegt.

11. Tierkäfig (100) nach Anspruch 5, wobei das Teleskopelement (110), das mit dem widerstandsverändernden Element (108) versehen ist, in einer Höhe von dem Boden (102) des Tierkäfigs (100) in der Nähe einer Höhe von dem Boden (102) des Tierkäfigs (100) eines Schwerpunkts des Tierkäfigs (100) eingerichtet ist.

12. Tierkäfig (100) nach Anspruch 5, wobei das Teleskopelement (110), das mit dem widerstandsverändernden Element (108) versehen ist, in einer Höhe von dem Boden (102) des Tierkäfigs (100) eingerichtet ist, die im Wesentlichen die Hälfte einer Gesamthöhe des Tierkäfigs (100) beträgt.

13. Tierkäfig (100) nach einem der vorstehenden Ansprüche, wobei der Tierkäfig (100) ferner ein Anschlagelement (140) umfasst, das konfiguriert ist, um eine Begrenzung für die Relativbewegung des vorderen Abschnitts (106a) und des hinteren Abschnitts (106b) derart auszubilden, dass sich der vordere Abschnitt (106a) und der hintere Abschnitt (106b) nicht über eine erste Relativposition hinaus bewegen können und wobei das Anschlagelement (140) konfiguriert ist, um eine Bewegung des vorderen Abschnitts (106a) und des hinteren Abschnitts (106b) über die erste Relativposition hinaus zu ermöglichen, wenn der Tierkäfig (100) einer Längskraft ausgesetzt wird, die höher als ein Schwellenwert ist.

14. Tierkäfig (100) nach Anspruch 13, wobei der Schwellenwert der Längskraft mindestens die Hälfte des Gewichts des Tierkäfigs (100) beträgt.

## Revendications

1. Cage d'animal (100) appropriée pour une utilisation pour le transport d'un animal dans un véhicule, ladite cage d'animal (100) comprenant :
- un fond (102),
- une partie supérieure (104),
- un ensemble cadre (106) reliant le fond (102) à la partie supérieure (104), l'ensemble cadre (106) comprenant une partie avant (106a) et une partie arrière (106b), la partie avant (106a) et la partie arrière (106b) pouvant être déplacées de manière réciproque l'une par rapport à l'autre le long d'une direction longitudinale (L) de la cage d'animal (100) de telle sorte qu'une longueur de la cage d'animal (100) peut être adaptée et dans laquelle la cage d'animal (100) comprend au moins un élément de modification de résistance (108) **caractérisée par** l'au moins un élément de modification de résistance (108) ayant au moins un état de force préréglé pour la modification d'une force longitudinale requise pour un déplacement relatif de la partie avant (106a) et arrière (106b), dans laquelle l'élément de modification de résistance (108) peut être réglé au moins sur un état de force élevée dans lequel la force longitudinale requise pour un déplacement relatif de la partie avant (106a) et de la partie arrière (106b) est élevée et un état de force faible dans lequel la force longitudinale requise pour un déplacement relatif de la partie avant (106a) et de la partie arrière (106b) est faible par rapport à l'état de force élevée.

2. Cage d'animal (100) selon la revendication 1, dans laquelle l'élément de modification de résistance (108) comprend un mécanisme de serrage (122) conçu pour modifier une pression appliquée à une interface (134) permettant de commander une force de frottement induite modifiant ainsi la force longitudinale requise pour un déplacement relatif de la partie avant (106a) et de la partie arrière (106b).

3. Cage d'animal (100) selon l'une quelconque des revendications précédentes, dans laquelle l'ensemble cadre (106) comprend au moins un élément télescopique (110) s'étendant entre la partie avant (106a) et la partie arrière (106b) et dans laquelle au moins l'un parmi l'au moins un élément télescopique (110) est pourvu de l'élément de modification de résistance (108).

4. Cage d'animal (100) selon la revendication 3, dans laquelle l'ensemble cadre (106) comprend une pluralité d'éléments télescopiques (110) fournis sur chaque côté latéral de la cage d'animal (100).

5. Cage d'animal (100) selon la revendication 3 ou 4, dans laquelle au moins un élément télescopique (110) sur chaque côté latéral de la cage d'animal (100) est pourvu d'un élément de modification de résistance (108).

6. Cage d'animal (100) selon la revendication 2, dans laquelle le mécanisme de serrage (122) est conçu pour être réglé dans un état serrant dans lequel la pression appliquée à l'interface (134) est élevée et dans un état relâché dans lequel la pression appliquée à l'interface (134) est faible, par rapport à celle-ci.

7. Cage d'animal (100) selon l'une quelconque des revendications précédentes, dans laquelle l'élément de modification de résistance (108) comprend une surface de came (126) conçue pour modifier la force requise pour un déplacement télescopique de la partie avant et arrière (106b).

8. Cage d'animal (100) selon la revendication 7 prise en dépendance de la revendication 2, dans laquelle le mécanisme de serrage (122) commande la position de la surface de came (126).

9. Cage d'animal (100) selon la revendication 1, dans laquelle la force longitudinale requise pour réaliser un déplacement relatif de la partie avant (106a) et de la partie arrière (106b) dans l'état de force élevée correspond à au moins la moitié d'un poids total de la cage d'animal (100).

10. Cage d'animal (100) selon la revendication 9, dans laquelle la force longitudinale requise pour réaliser un déplacement relatif de la partie avant (106a) et de la partie arrière (106b) dans l'état de force élevée est comprise entre 50 N et 200 N.

11. Cage d'animal (100) selon la revendication 5, dans laquelle l'élément télescopique (110) pourvu de l'élément de modification de résistance (108) est agencé à une hauteur par rapport au fond (102) de la cage d'animal (100) à proximité d'une hauteur par rapport au fond (102) de la cage d'animal (100) d'un centre de gravité de ladite cage d'animal (100).

12. Cage d'animal (100) selon la revendication 5, dans laquelle l'élément télescopique (110) pourvu de l'élément de modification de résistance (108) est agencé à une hauteur par rapport au fond (102) de la cage d'animal (100) qui vaut pratiquement la moitié d'une hauteur totale de la cage d'animal (100).

13. Cage d'animal (100) selon l'une quelconque des revendications précédentes, dans laquelle la cage d'animal (100) comprend en outre un élément d'arrêt (140) étant conçu pour former une limite pour le déplacement relatif de la partie avant (106a) et de la partie arrière (106b) de telle sorte que la partie avant (106a) et la partie arrière (106b) ne peuvent pas se déplacer au-delà d'une première position relative et dans laquelle l'élément d'arrêt (140) est conçu pour permettre un déplacement de la partie avant (106a) et de la partie arrière (106b) au-delà de la première position relative lorsque la cage d'animal (100) est soumise à une force longitudinale étant supérieure à une valeur seuil.

14. Cage d'animal (100) selon la revendication 13, dans laquelle la valeur seuil de la force longitudinale vaut au moins la moitié du poids de la cage d'animal (100).
